# EUROPÄISCHE PATENTSCHRIFT

(11) **EP 3 164 606 B1**
(45) Veröffentlichungstag und Bekanntmachung des Hinweises auf die Patenterteilung: **05.08.2020**
(21) Anmeldenummer: 15727311.1
(22) Anmeldetag: 05.06.2015
(51) Int. Cl.: F15B 1/08

(54) **HYDROPNEUMATISCHER DRUCKSPEICHER**
HYDROPNEUMATIC PRESSURE ACCUMULATOR
ACCUMULATEUR DE PRESSION HYDROPNEUMATIQUE

(30) Priorität: 05.07.2014 DE 102014010006
(43) Veröffentlichungstag der Anmeldung: 10.05.2017
(73) Patentinhaber: Hydac Technology GmbH, 66280 Sulzbach/Saar (DE)
(72) Erfinder: WEBER, Nobert, 66125 Saarbrücken (DE)
(74) Vertreter: Bartels und Partner, Patentanwälte
(86) Internationale Anmeldenummer: PCT/EP2015/001143
(87) Internationale Veröffentlichungsnummer: WO 2016/005019

(56) Entgegenhaltungen:
- EP-A1- 0 202 502
- WO-A1-2004/085853
- DE-A1- 1 751 900
- US-A- 2 688 984

## Beschreibung

Die Erfindung betrifft einen hydropneumatischen Druckspeicher mit den Merkmalen im Oberbegriff des Anspruchs 1.

Derartige hydropneumatische Druckspeicher sind Stand der Technik (DE 10 2009 049 547 A1) und werden häufig als Pulsationsdämpfer in hydraulischen Kreisläufen eingesetzt, bei denen es wünschenswert oder funktionsrelevant ist, Druckschwankungen im System zu glätten, wie dies beispielsweise bei Hydrolenkungen oder Bremssystemen mobiler Arbeitsgerätschaften, etwa Radlagern oder dergleichen, der Fall ist. Um einen für eine effiziente Dämpfung optimalen Verlauf der Druck/Volumen-Kennlinie zu erreichen, muss bei derartigen Druckspeichern der Gas-Arbeitsraum verhältnismäßig kleinvolumig ausgebildet sein. Dies führt jedoch dazu, dass die einwandfreie Funktion zeitlich begrenzt ist, weil der übliche und bekannte Gasverlust, der sich beim Betrieb zwangsläufig über Dichtungen bei Kolbenspeichern oder aufgrund der Permeabilität bei Blasen- oder Membranspeichern ergibt, bei kleinen Gasvolumina zu einem unangemessen hohen Druckverlust führt. Wird, um dem zu begegnen, das Volumen des Gas-Arbeitsraums derart vergrößert, dass die auftretenden Gasverluste nicht zu einem ins Gewicht fallenden Druckverlust führen und dadurch eine Verlängerung der Betriebslebensdauer erreicht wird, verschlechtert sich die Effizienz der Dämpfung, insbesondere bei Druckimpulsen höherer Frequenz, weil das System bei höheren Arbeitsraumvolumina zu "weich" wird.

Die DE 17 51 900 A1 offenbart einen hydropneumatischen Druckspeicher mit einem Speichergehäuse und einem beweglichen Trennelement, das im Speichergehäuse einen ein unter Druck stehendes Arbeitsgas enthaltenden Gas-Arbeitsraum von einem Fluidraum separiert, wobei ein ein Zusatzvolumen des unter Druck stehenden Arbeitsgases enthaltender Gas-Vorratsraum vorgesehen ist, der dem Gas-Arbeitsraum über eine Verbindungsstrecke zugeschaltet ist, die ein Rückschlagventil enthält, das bei einem den Druck im Gas-Arbeitsraum übersteigenden Druck im Gas-Vorratsraum öffnet, wobei der Gas-Vorratsraum im Speichergehäuse vorgesehen ist, wobei sich das Speichergehäuse entlang einer Längsachse erstreckt, wobei eine zur Längsachse quer verlaufende Trennwand das Speichergehäuse in den an ein axiales Ende des Speichergehäuses angrenzenden Gas-Vorratsraum und den Gas-Arbeitsraum unterteilt und wobei die Trennwand zur Bildung der Verbindungsstrecke einen Durchgang aufweist.

Die US 2 688 984 A und die WO 2004/085853.A1 beschreiben hydropneumatische Druckspeicher. Ein Druckspeicher wird durch die EP 0 202 502 A1 aufgezeigt.

Im Hinblick auf diese Problematik liegt der Erfindung die Aufgabe zugrunde, einen hydropneumatischen Druckspeicher, insbesondere in Form eines Pulsationsdämpfers, zur Verfügung zu stellen, der, ohne die Nachteile eines großvolumigen Gas-Arbeitsraums in Kauf nehmen zu müssen, eine lange Betriebslebensdauer bei gleichzeitig hoher Effizienz der Dämpfung gewährleistet.

Erfindungsgemäß löst diese Aufgabe ein hydropneumatischer Druckspeicher, der die Merkmale des Patentanspruchs 1 in seiner Gesamtheit aufweist.

Gemäß dem kennzeichnenden Teil des Anspruchs 1 ist diese Aufgabe bei einem hydropneumatischen Druckspeicher dadurch gelöst, dass die Trennwand an der Innenwand des Speichergehäuses festgelegt ist.

Dadurch lässt sich der erfindungsgemäße Druckspeicher kostengünstig mit einem Speichergehäuse üblicher Bauweise realisieren, das lediglich die innere, stationär angeordnete Trennwand mit Verbindungsstrecke in Form eines Rückschlagventils enthält.

Ferner ist vorgesehen, dass die Verbindungsstrecke zwischen dem Gas-Vorratsraum und dem Gas-Arbeitsraum ein Rückschlagventil enthält, das bei einem den Druck im Gas-Arbeitsraum übersteigenden Druck im Gas-Vorratsraum öffnet. Dadurch ist jeglicher Übertritt von Gas bei durch Pulsationen erzeugtem Druckanstieg vom Gas-Arbeitsraum in den Gas-Vorratsraum verhindert, so dass die betreffenden Räume dynamisch vollständig entkoppelt sind, während bei Druckabsenkung im Gas-Arbeitsraum über das sich öffnende Rückschlagventil ein Nachströmen ermöglicht ist. Das statische Verhalten entspricht daher einem großvolumigen System.

Der erfindungsgemäße Druckspeicher lässt sich mit einem Speichergehäuse üblicher Bauweise realisieren, das abweichend von der üblichen Bauweise lediglich die innere Trennwand mit Verbindungsstrecke enthält, wobei das Speichergehäuse entsprechend großräumig für ein ausreichend großes Gas-Zusatzvolumen ausgebildet sein kann, während durch die Anordnung der Trennwand der Innenraum derart aufgeteilt sein kann, dass trotz großem Zusatzvolumen ein in gewünschter Weise kleinvolumiger Gas-Arbeitsraum gebildet ist.

Für eine baulich einfache Gestaltung der dynamischen Entkopplung des Gas-Arbeitsraums vom Gas-Vorratsraum kann das Rückschlagventil vorgesehen sein, das mit Vorteil im Durchgang der Trennwand angeordnet ist.

Mit Vorteil kann das Rückschlagventil mit einer vorgegebenen Schließkraft in die Schließstellung vorgespannt sein. Durch Einstellen der Schließkraft, die vorzugsweise mittels einer Schließfeder erzeugt ist, kann die Druckdifferenz vorgegeben werden, ab der Gas aus dem Vorratsraum nachströmen kann.

Die Erfindung ist auf beliebige Speicherbauweisen anwendbar. Für Anwendungen als Pulsationsdämpfer ist der erfindungsgemäße Druckspeicher mit Vorteil als Kolbenspeicher mit einem im Gehäuse axial verfahrbaren, das Trennelement bildenden Kolben oder als Membranspeicher ausgebildet, der ein Trennelement in Form einer zumindest teilweise aus elastomerem Material bestehenden Membran aufweist.

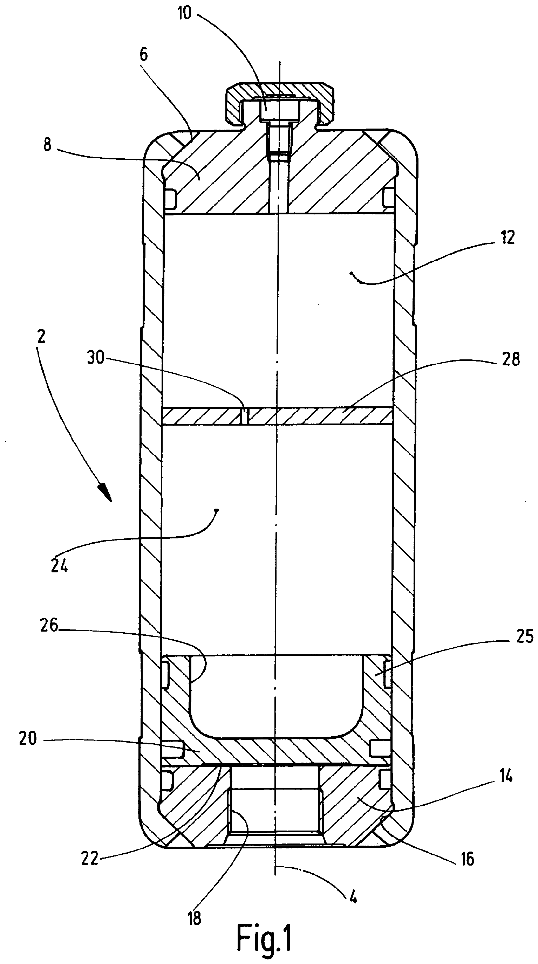

Nachstehend ist die Erfindung anhand von in der Zeichnung dargestellten Ausführungsbeispielen im Einzelnen erläutert. Es zeigen, wobei Fig. 1 und die zugehörige Beschreibung nicht Gegenstand der vorliegenden Patentanmeldung ist:
- Fig. 1: einen schematisch vereinfachten Längsschnitt eines Ausführungsbeispiels eines nicht zur Erfindung gehörenden hydropneumatischen Druckspeichers;
- Fig. 2: einen schematisch vereinfachten Längsschnitt eines zweiten Ausführungsbeispiels des erfindungsgemäßen Druckspeichers;
- Fig. 3: eine abgebrochen gezeichnete Teildraufsicht entsprechend der in Fig. 2 mit III - III bezeichneten Ansicht; und
- Fig. 4: einen schematisch vereinfachten Längsschnitt eines Druckspeichers gemäß einem dritten Ausführungsbeispiel der Erfindung.

Die Fig. 1 zeigt ein Ausführungsbeispiel reines Druckspeichers in Form eines Kolbenspeichers. Dieser weist ein Speichergehäuse 2 mit einem kreiszylindrischen, sich entlang einer Längsachse 4 erstreckenden Innenraum auf. Das rohrartige Speichergehäuse 2 ist an dem in Fig. 1 oben liegenden Ende durch einen mittels Umbördelung 6 festgelegten Endeinsatz 8 angeschlossen. Letzterer weist einen konzentrisch angeordneten Gas-Füllanschluss 10 üblicher Bauweise auf, über den ein an den Einsatz 8 angrenzender Gas-Vorratsraum 12 mit einem unter einem Vorfülldruck stehenden Arbeitsgas, wie Stickstoffgas N₂, befüllbar ist. Am entgegengesetzten, unteren Ende ist das Speichergehäuse 2 durch einen Endeinsatz 14 abgeschlossen, der ebenfalls mittels einer Umbördelung 16 festgelegt ist und eine zentrale Öffnung 18 für einen nicht gezeigten Fluidanschluss aufweist. Als Kolbenspeicher weist das gezeigte Ausführungsbeispiel einen Speicherkolben 20 auf, der im Speichergehäuse 2 frei beweglich ist und das Trennelement zwischen einem sich an die Öffnung 18 anschließenden Fluidraum 22 und dem an die Oberseite des Speicherkolbens 20 angrenzenden Gas-Arbeitsraum 24 bildet. Um bei einer Anwendung als Pulsationsdämpfer die träge Masse des Speicherkolbens 20 gering zu halten, jedoch eine gute Führung an der zylindrischen Innenwand des Speichergehäuses 2 zu ermöglichen, weist der Speicherkolben 20 innerhalb eines sich axial erstreckenden Kolbenhemdes 25 einen trogartigen Hohlraum 26 auf. Bei dem in Fig. 1 dargestellten Betriebszustand ist der Fluidraum 22 drucktos, so dass der Speicherkolben 20 seine untere Endlage einnimmt.

Zwischen dem Gas-Arbeitsraum 24 und dem Gas-Vorratsraum 12 befindet sich eine Trennwand 28, die sich senkrecht zur Achse 4 über den gesamten Innendurchmesser erstreckt und an der Innenwand des Speichergehäuses 2 festgelegt ist, beispielsweise mittels einer (nicht gezeigten) Schweißstelle. In der Trennwand 28 ist als Verbindungsstrecke zwischen Gas-Vorratsraum 12 und Gas-Arbeitsraum 24 ein Durchgang 30 vorgesehen. Dieser hat beim Ausführungsbeispiel von Fig. 1 einen ausreichend feinen Bohrungsdurchmesser, so dass der Durchgang 30 gleichzeitig eine Drosselstelle bildet. Wenn der Druckspeicher für seine Inbetriebnahme über den Füllanschluss 10 mit dem Arbeitsgas befüllt wird, setzt sich der Vorfülldruck über den Durchgang 30 zum Gas-Arbeitsraum 24 fort, so dass in beiden Räumen 12 und 24 Gleichdruck herrscht. Beim Betrieb als Pulsationsdämpfer führen die Arbeitsbewegungen des Speicherkolbens 20 zu entsprechend schnellen Druckwechseln im Gas-Arbeitsraum 24, die wegen der im Durchgang 30 gebildeten Drosselstelle keine merklichen Volumenverschiebungen verursachen, so dass für das dynamische Betriebsverhalten das Volumen des Gas-Arbeitsraums 24 maßgeblich ist. Da bei im Laufe des Betriebs auftretenden Gasverlusten aus dem Zusatzvolumen im Gas-Vorratsraum 12 ein Nachströmen über den Durchgang 30 erfolgt, entspricht jedoch das statische Langzeitbetriebsverhalten einem Speicher mit großem Gasvolumen.

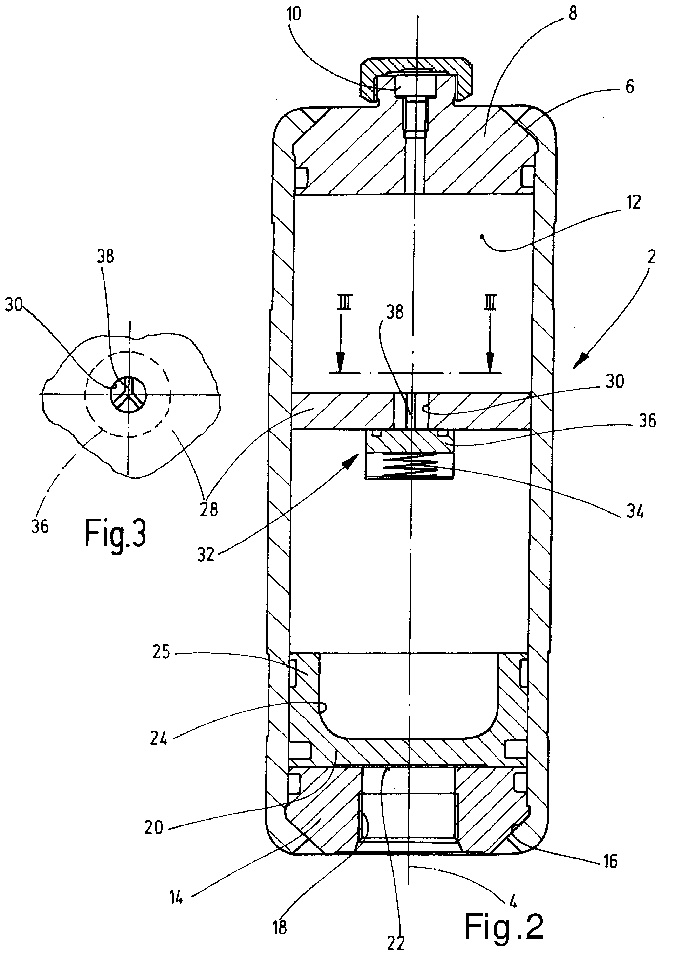

Das weitere Ausführungsbeispiel von Fig. 2 unterscheidet sich vom ersten Ausführungsbeispiel dadurch, dass dem Durchgang 30 keine Drosselstelle, sondern ein Rückschlagventil 32 zugeordnet ist. Dieses weist, wie der Fig. 2 und der Teilansicht von Fig. 3 zu entnehmen ist, einen mittels einer Schließfeder 34 in die Schließstellung vorgespannten Schließkörper 36 auf, der für Axialbewegungen im Durchgang 30 mittels eines sternförmigen Führungskörpers 38 geführt ist, wie dies am deutlichsten der Fig. 3 entnehmbar ist. Die Funktionsweise des Ausführungsbeispiels von Fig. 2 und 3 unterscheidet sich vom zuvor beschriebenen Beispiel lediglich insofern, als der Gas-Arbeitsraum 24 durch das geschlossene Rückschlagventil 32 vom Gas-Vorratsraum 12 dynamisch vollständig entkoppelt ist, so lange der Gas-Arbeitsraum 24 ein höheres Druckniveau als der Gas-Vorratsraum 12 besitzt. Das Nachströmen von Zusatzgas aus dem Gas-Vorratsraum 12 erfolgt erst bei Vorliegen eines höheren Drucks im Gas-Vorratsraum 12, wobei die für das Öffnen des Rückschlagventils 32 maßgebliche Druckdifferenz durch die Einstellung der mittels der Feder 34 erzeugten Schließkraft vorgebbar ist.

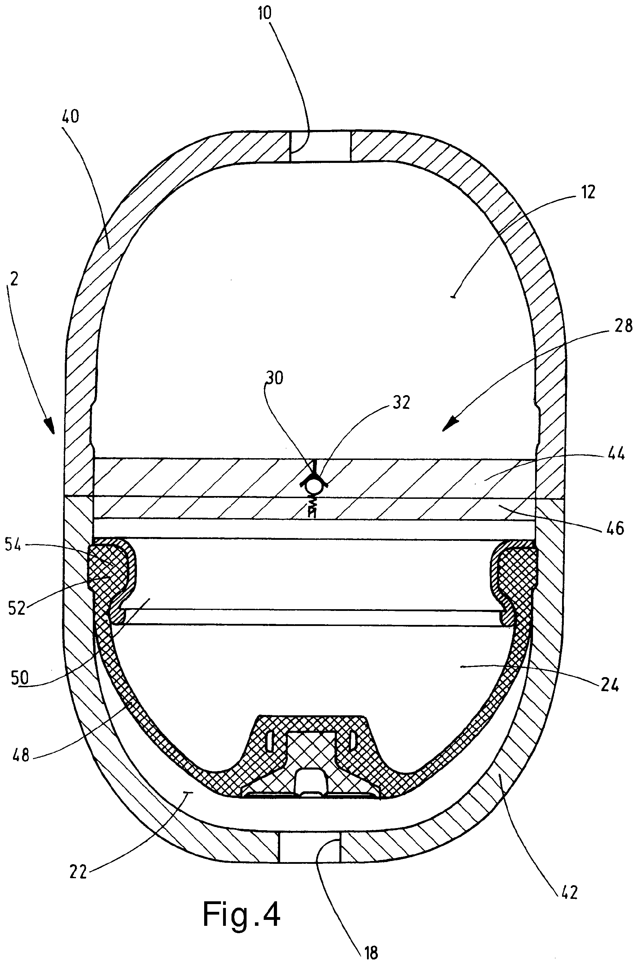

Die Fig. 4 zeigt ein weiteres Ausführungsbeispiel in Form eines durch einen Membranspeicher gebildeten Pulsationsdämpfers. Wie beim Beispiel von Fig. 2 und 3 ist in der Verbindungsstrecke zwischen Gas-Vorratsraum 12 und Gas-Arbeitsraum 24 ein Rückschlagventil 32 vorgesehen, das, wie beim zuvor beschriebenen Beispiel, federbelastet ist. Die Trennwand 28 ist zweigeteilt ausgebildet, um den Einbau des in die Trennwand 28 integrierten Rückschlagventils 32 zu ermöglichen. Das Speichergehäuse 2 ist bei diesem Ausführungsbeispiel aus zwei jeweils einteiligen, kugelartigen Schalen 40 und 42 zusammengesetzt, wobei eine Teilplatte 44 der Trennwand 28 an der oberen Schale 40 festgelegt ist und die zweite Teilplatte 46 der Trennwand 28 an der unteren Schale 42. In der Nähe der unteren Teilplatte 46 ist eine Speichermembran 48 mittels eines Halteringes 50 an der Innenwand der unteren Schale 42 festgelegt, wobei das elastomere Material der Membran 48, wie bei derartigen Membranen üblich, einen verdickten Randwulst 52 aufweist, der in einer ringnutartigen Aufnahme 54 des Halteringes 50 gehalten ist.

Die Funktionsweise des Ausführungsbeispiels von Fig. 4 entspricht derjenigen des Beispiels von Fig. 2 und 3. Es versteht sich, dass die Erfindung auch auf andere Speicherbauweisen, wie beispielsweise Blasenspeicher, anwendbar ist. Die in den Figuren gezeigten Größenverhältnisse von Gas-Vorratsraum 12 und Gas-Arbeitsraum 24 sind nicht maßgebend und können für gewünschte Volumengrößen in Anpassung an das jeweils gewünschte Betriebsverhalten gewählt werden.

## Patentansprüche

1. Hydropneumatischer Druckspeicher, insbesondere Pulsationsdämpfer, mit einem Speichergehäuse (2) und einem beweglichen Trennelement (20; 48), das im Speichergehäuse (2) einen ein unter Druck stehendes Arbeitsgas enthaltenden Gas-Arbeitsraum (24) von einem Fluidraum (22) separiert, wobei ein ein Zusatzvolumen des unter Druck stehenden Arbeitsgases enthaltender Gas-Vorratsraum (12) vorgesehen ist, der dem Gas-Arbeitsraum (24) über eine Verbindungsstrecke (30) zugeschaltet ist, die ein Rückschlagventil (32) enthält, das bei einem den Druck im Gas-Arbeitsraum (24) übersteigenden Druck im Gas-Vorratsraum (12) öffnet, wobei der Gas-Vorratsraum (12) im Speichergehäuse (2) vorgesehen ist, wobei sich das Speichergehäuse (2) entlang einer Längsachse (4) erstreckt, wobei eine zur Längsachse (4) quer verlaufende Trennwand (28) das Speichergehäuse (2) in den an ein axiales Ende des Speichergehäuses (2) angrenzenden Gas-Vorratsraum (12) und den Gas-Arbeitsraum (24) unterteilt und wobei die Trennwand (28) zur Bildung der Verbindungsstrecke einen Durchgang (30) aufweist, wobei die Trennwand (28) vollständig im Speichergehäuse (2) installiert ist und **dadurch gekennzeichnet, dass** die Trennwand (28) an der Innenwand des Speichergehäuses (2) festgelegt ist.

2. Druckspeicher nach Anspruch 1, **dadurch gekennzeichnet,**
**dass** das Rückschlagventil (32) mit einer vorgegebenen Schließkraft (34) in die Schließstellung vorgespannt ist.

3. Druckspeicher nach einem der vorstehenden Ansprüche, **dadurch gekennzeichnet, dass** er als Kolbenspeicher mit einem im Gehäuse (2) axial verfahrbaren, das Trennelement bildenden Kolben (20) ausgebildet ist.

4. Druckspeicher nach einem der vorstehenden Ansprüche, **dadurch gekennzeichnet, dass** er als Membranspeicher mit einem Trennelement in Form einer zumindest teilweise aus elastomerem Material bestehenden Membran (48) ausgebildet ist.

## Claims

1. Hydropneumatic pressure accumulator, in particular a pulsation damper, with an accumulator housing (2) and a moveable separating element (20; 48), which separates a gas working chamber (24) containing a pressurised working gas from a fluid chamber (22) in the accumulator housing (2), wherein a gas supply chamber (12) containing an additional volume of the pressurised working gas is provided, said supply chamber being connected to the gas working chamber (24) by means of a connecting line (30), which contains a non-return valve (32) which opens when the pressure in the gas supply chamber (12) exceeds the pressure in the gas working chamber (24), wherein the gas supply chamber (12) is provided in the accumulator housing (2), wherein the accumulator housing (2) extends along a longitudinal axis (4), wherein a separating wall (28) running transversely in relation to the longitudinal axis (4) divides the accumulator housing (2) into the gas supply chamber (12) adjacent to one axial end of the accumulator housing (2) and the gas working chamber (24) and wherein the separating wall (28) comprises a through passage (30) to form the connecting line, wherein the separating wall (28) is installed fully in the accumulator housing (2) and **characterised in that** the separating wall (28) is fixed to the inner wall of the accumulator housing (2).

2. Pressure accumulator according to claim 1, **characterised in that** the non-return valve (32) is pre-tensioned in the closing position with a pre-defined closing force (34).

3. Pressure accumulator according to any one of the preceding claims, **characterised in that** it is designed as a piston accumulator having a piston (20) that can be moved axially in the housing (2) and forming the separating element.

4. Pressure accumulator according to any one of the preceding claims, **characterised in that** it is designed as a membrane accumulator with a separating element in the form of a membrane (48) which consists at least partially of elastomer material.

## Revendications

1. Accumulateur de pression hydropneumatique, notamment amortisseur de pulsation, comprenant une enveloppe (2) d'accumulateur et un élément (20, 48) mobile de séparation, qui, dans l'enveloppe (2) de l'accumulateur, sépare un espace (24) de travail pour du gaz, contenant du gaz de travail sous pression d'un espace (22) pour du fluide, dans lequel il est prévu un espace (12) de réserve de gaz, qui contient un volume supplémentaire du gaz de travail sous pression et qui est raccordé à l'espace (24) de travail pour du gaz par une voie (30) de communication, qui contient un clapet (32) antiretour s'ouvrant pour une pression dans l'espace (12) de réserve de gaz dépassant la pression dans l'espace (24) de travail pour du gaz, l'espace (12) de réserve de gaz étant prévu dans l'enveloppe (2) de l'accumulateur, l'enveloppe (2) de l'accumulateur s'étendant suivant un axe (4) longitudinal, une cloison (28) s'étendant transversalement à l'axe (4) longitudinal subdivisant l'enveloppe (2) de l'accumulateur en l'espace (12) de réserve pour du gaz au voisinage d'une extrémité axiale de l'enveloppe (2) de l'accumulateur et en l'espace (24) de travail pour du gaz et la cloison (28) ayant un passage (30) pour former la voie de communication, la cloison (28) étant montée complètement dans l'enveloppe (2) de l'accumulateur et **caractérisé en ce que** la cloison (28) est fixée à la paroi intérieure de l'enveloppe (2) de l'accumulateur.

2. Accumulateur de pression suivant la revendication 1, **caractérisé en ce que** le clapet (32) antiretour est précontraint dans la position de fermeture par une force (34) de fermeture donnée à l'avance.

3. Accumulateur de pression suivant l'une des revendications précédentes, **caractérisé en ce qu'**il est constitué sous la forme d'un accumulateur à piston, ayant un piston (20) constitué en l'élément de séparation et pouvant se déplacer axialement dans l'enveloppe (2).

4. Accumulateur de pression suivant l'une des revendications précédentes, **caractérisé en ce qu'**il est constitué sous la forme d'un accumulateur à membrane ayant un élément de séparation sous la forme d'une membrane (48), au moins en partie, en matière élastomère.
